# EUROPEAN PATENT APPLICATION

(11) **EP 3 245 864 A1**
(43) Date of publication of application: **22.11.2017**
(21) Application number: 16170622.1
(22) Date of filing: 20.05.2016
(51) Int. Cl.: A01G 9/14, A01G 13/02, C08J 5/18, C08K 5/103, B32B 27/18

(54) **ANTI-FOG AGENT**

(71) Applicant: Akzo Nobel Chemicals International B.V., 6824 BM Arnhem (NL)
(72) Inventor: SPIJKERMAN, Geesje Klasina, NL-7421 AS Deventer (NL); VAN DER SCHUUR, Jan Martijn, NL-7553 CE Hengelo (NL)
(74) Representative: Akzo Nobel IP Department

(57) **Abstract**

Antifog agent comprising:
- 50-95 wt% of ethoxylated glycerol fatty acid ester and
- 5-50 wt% of one or more substances selected from polyglycerol fatty acid esters and glycerol fatty acid triesters.

Said antifog agent is especially suitable for preventing fogging in agricultural films.

## Description

This invention relates to the prevention of fogging on the surface of polymeric films.

Polyolefins, such as polyethylene, are used in various agricultural applications, such as greenhouse covers and energy screens. Polyolefins have a high resistance to moisture vapour transmission and high transparency, which is evidently essential for agricultural applications.
However, due to temperature changes, any water that evaporates from the soil or plants starts to condense on the inner surface of the polyolefin film. The water droplets form a fogged surface, thereby reducing the visual transparency of the film. This effect is generally called "fogging" or "clouding". Fogging leads to reduced light transmission, which negatively affects the growth of crops covered by said film.

In order to reduce fogging of polyolefin films, so-called antifog agents can be added to the polyolefin. These antifog agents can be coated on the polyolefin film, or they can be incorporated in the polyolefin film. Incorporation in the film is generally preferred over coating on the film because of the lower processing costs, the lower environmental impact (i.e. no coating solvents required), and the absence of a separate layer that can be wiped or washed off the surface. Examples of known antifog agents for incorporation in polyolefin films are monoglycerol esters of fatty acids, sorbitan esters of fatty acids, and combinations thereof.

The antifog action of the incorporated antifog agents is most likely due to the migration of the antifog agent to the film's surface, thereby enhancing the hydrophilicity of the surface and decreasing the surface tension of the water, which causes the water to form a continuous, visually clear film instead of a fogged surface comprising individual droplets of water.

Fogging may occur under relatively cold conditions (below ambient temperature, i.e. cold outside conditions) and relatively warm conditions (above ambient temperature, e.g. in warm humid outside conditions). The first are called cold fog conditions; the second are called hot fog conditions.

WO 84/03296 discloses the use as antifog agent in low density polyethylene of a fatty acid ester alkoxylated with 10-55 ethylene oxide groups.

JP-A 62-041240 discloses a polyethylene film with antifog properties which contains a surface active agent with a crystallization temperature of 23°C or more, a glycerol or sorbitan ester of an unsaturated fatty acid with a crystallization temperature of 23°C or less, and a plasticizer.
As surface active agent with a crystallization temperature of 23°C or more, sorbitan or glycerol esters optionally alkoxylated with 0.5-5.0 ethylene oxide or propylene oxide groups are mentioned. In the examples of this document, non-alkoxylated sorbitan sesquipalmitate and non-alkoxylated diglycerol distearate were used.
As plasticizer, di-2-ethylhexyl phthalate and tricresyl phosphate are indicated as preferred.
The plasticizer in this prior art composition is essential for obtaining sufficient antifog properties. The plasticizer, however, weakens the film to such an extent that its mechanical properties are insufficient for agricultural applications. Furthermore, plasticizers such as phthalates and phosphates are known to be toxic to humans, but also exhibit phytotoxicity, and their presence in agricultural films is also undesired from that perspective.

WO 2016/062684 discloses the use of ethoxylated glycerol fatty acid esters as antifog agent in agricultural films. The degree of ethoxylation is 1.0-5.0, preferably 1.0-3.0. Plasticizers were absent from the film since they were shown to deteriorate the mechanical properties.

It has now been found that the antifog action of ethoxylated glycerol fatty acid esters can be further improved by the additional presence of at least one substance selected from polyglycerol fatty acid esters and glycerol fatty acid triesters.

The present invention therefore relates to an antifog agent comprising:
- 50-95 wt% of ethoxylated glycerol fatty acid ester and
- 5-50 wt% of one or more substances selected from polyglycerol fatty acid esters and glycerol fatty acid triesters.

In a preferred embodiment, the antifog agent consists of the above-mentioned compounds, meaning that it contains no other compounds than the indicated ones and that the indicated weight percentages add up to 100 wt%.

The antifog agent can have the form of a simple mixture of the ingredients, but may also be present in a masterbatch, i.e. a dispersion of the above compounds in a polymeric matrix. Such masterbatch preferably comprises the antifog agent in a concentration of 5-70 wt%, more preferably 10-50 wt%, most preferably 20-40 wt%.
Suitable polymers for such polymeric matrix are polyethylene, polypropylene (PP), random- and block-copolymers of ethylene and propylene, ethylene vinyl acetate copolymer (EVA), and polymers obtained from ethylene or propylene copolymerized with minimal amounts of other mono-olefinic monomers such as butene, isobutylene, acrylic acids, esters of acrylic acids, styrene or combinations thereof. Preferred polyolefins are LLDPE, LDPE, EVA, and polymer blends containing LDPE and/or EVA. Most preferred is EVA, more in particular EVA with a vinyl acetate content 0.10-30 wt%.

The invention also relates to a polymeric film or sheet comprising said antifog agent and its use for agricultural applications.

The ethoxylated glycerol fatty acid ester can be prepared by ethoxylation of a glycerol fatty acid ester. Ethoxylation processes are well known to those skilled in the art and preferably involve the treatment of molten ester with ethylene oxide under high pressure and temperature in the presence of a base catalyst. During this process, initial mono-glycerol esters may react to form di- and tri-glycerol esters and glycerol. Likewise, di-glycerol esters may react to form mono- and tri-glycerol esters and glycerol, etc. Essentially all these components will be ethoxylated during the process.
The average degree of ethoxylation of the resulting material can be controlled by the amount ethylene oxide, as is also well known by the skilled person.
Hence, the glycerol esters generally will consist of a mixture of glycerol esters, which mixture has been ethoxylated to a certain average degree of ethoxylation.

The molar average degree of ethoxylation of the glycerol ester(s) is in the range of 1.0 to below 5.0, which means that the product obtained by the ethoxylation reaction contains, on average, 1.0 to less than 5.0 mole of ethylene oxide per mole of initial glycerol ester. This average degree of ethoxylation can be determined by determining the hydroxyl value of the material. This value can be determined by a titration method. According to this method, a solution of phthalic anhydride in pyridine is added to a sample of ethoxylated glycerol ester. Hydroxyl groups in the sample react under enhanced temperature with phthalic anhydride. The reaction is catalysed by 4-dimethyl-aminopyridine. The phthalic anhydride that has not been consumed by the sample and the acid that has formed are determined by titration with alkali. Also the total added amount of phthalic anhydride in a blank solution is determined in this way. The results allow the calculation of free OH-functionalities in the sample, from which the number of moles of ethoxylated product can be calculated. With the sample weight one can calculate the average molecular weight and, hence, the average number of moles of ethylene oxide groups per mole of initial glycerol ester.
In a preferred embodiment, the esters have a molar average degree of ethoxylation in the range 1.0-4.0, more preferably 1.0-3.0, and most preferably 2.0-3.0.

The glycerol esters to be ethoxylated can be prepared by known procedures, such as the glycerolysis of natural oils or fats, which are generally mixtures of various fatty acid triglycerides. This process leads to a complex mixture of alpha- and beta-monoglycerides, diglycerides, traces of triglycerides, and free fatty acids. The components of such mixtures can be separated by suitable distillation procedures.
Suitable oils and fats are beef tallow, mutton tallow, butter fat, coconut oil, corn oil, cotton seed oil, lard oil, olive oil, peanut oil, palm oil, soy bean oil, sesame oil, sunflower oil, rapeseed oil, and their partial or fully hydrogenated derivatives. Commercially available glycerol mono-esters generally contain traces of preservatives, free glycerol, free fatty acids, and glycerol di- and tri-esters.

The fatty acid-originating part of the glycerol ester has 12 to 22 carbon atoms, preferably 14 to 20 carbon atoms, and most preferably 16 to 18 carbon atoms. The fatty acid may be substituted with hydroxy groups. The fatty acid may be saturated or unsaturated, although saturated fatty acids are preferred. Examples of saturated fatty acids with 12 to 22 carbon atoms are lauric acid (C12), myristic acid (C14), palmitic acid (C16), stearic acid (C18), hydrogenated ricinoleic acid (C18), arachidic acid (C20), and behenic acid (C22).

The glycerol esters to be ethoxyalated can be esters of monoglycerol, diglycerol, and polyglycerol. It may also be mixtures of glycerol esters of different saturated fatty acids, e.g. fatty acids with 16 and with 18 carbon atoms.

The glycerol esters to be ethoxyalated can be mono-esters, di-esters, tri-esters, and mixtures thereof. In a preferred embodiment, 20-90 wt%, more preferably 30-80 wt%, even more preferably 40-70 wt%, and most preferably 40-60 wt% - of such the mixture of glycerol esters consists of mono-esters.

In a preferred embodiment, the ethoxylated glycerol fatty acid ester will comprise 20-90 wt%, more preferably 30-80 wt%, even more preferably 40-70 wt%, and most preferably 40-60 wt% of glycerol monostearate ethoxylated with, on average, 1.0 to below 5.0 mole% of ethylene oxide groups.

Polyglycerol fatty acid esters contain a polyglycerol unit, esterified with one or more fatty acids. Polyglycerol is an oligomer of glycerol and preferably contains at least two glycerol units. The general formula of polyglycerol is:

CH₂(OH)-CH(OH)-CH₂-[O-CH₂CH(OH)-CH₂]ₙ-O-CH₂-CH(OH)-CH₂(OH)

wherein n ranges from 0 to 38.
Polymerization of glycerol is generally conducted in anhydrous medium, a temperature above 200°C and in the presence of an alkaline catalyst. Water formed during the reaction is continuously distilled off. The reaction results in a mixture of polyglycerols, with an average value for n. The preferred average number of glycerol units in the polyglycerol is 1.5-5.0, more preferably 2.0-4.0, and most preferably 2.5-3.5.

Polyglycerol fatty acid esters can be produced by esterifying polyglycerol with fatty acids or by transesterification of polyglycerol with triglyceride oils or fats. The production of polyglycerol fatty acid esters is disclosed in EP 0 625 563 A1.

This reaction will result in a mixture of polyglycerol esters with different numbers of fatty acid chains, resulting in mono-esters, di-esters, tri-esters, etc. In a preferred embodiment, 20-90 wt%, more preferably 30-80 wt%, even more preferably 40-70 wt%, and most preferably 40-60 wt% - of the mixture of polyglycerol esters consists of mono-esters. Examples of such mono-esters are polyglycerol monostearate, polyglycerol monopalmitate, polyglycerol monomyristate, and polyglycerol monolaurate.
The fatty acid preferably has 12 to 22 carbon atoms, preferably 14 to 20 carbon atoms, and most preferably 16 to 18 carbon atoms. The fatty acid may be substituted by hydroxy groups. The fatty acid may be saturated or unsaturated, although saturated fatty acids are preferred. Examples of saturated fatty acids with 12 to 22 carbon atoms are lauric acid (C12), myristic acid (C14), palmitic acid (C16), stearic acid (C18), hydrogenated ricinoleic acid (C18), arachidic acid (C20), and behenic acid (C22), and mixtures thereof. Fatty acids with 16 and with 18 carbon atoms are preferred, including mixtures thereof. Stearic acid is the most preferred fatty acid.
In a preferred embodiment, 20-90 wt%, more preferably 30-80 wt%, even more preferably 40-70 wt%, and most preferably 40-60 wt% - of the mixture of polyglycerol esters consists of polyglycerol mono-stearate with an average number of glycerol units of 1.5-5.0, more preferably 2.0-4.0, most preferably 2.5-3.5.

Glycerol fatty acid triesters are also referred to as triglycerides, which are the constituents or natural oils and fats. They contain a monoglyceride unit, esterified on all three hydroxyl units with a fatty acid. The fatty acid preferably has 12 to 22 carbon atoms, preferably 14 to 20 carbon atoms, and most preferably 16 to 18 carbon atoms. The fatty acid may be substituted with hydroxy groups. The fatty acid may be saturated or unsaturated, although saturated fatty acids are preferred. Examples of saturated fatty acids with 12 to 22 carbon atoms are lauric acid (C12), myristic acid (C14), palmitic acid (C16), stearic acid (C18), hydrogenated ricinoleic acid (C18), arachidic acid (C20), and behenic acid (C22), and mixtures thereof. Fatty acids with 16 and with 18 carbon atoms and mixtures thereof are preferred. Stearic acid is the most preferred fatty acid.
It is also possible to use a natural oil or fat as the glycerol fatty acid triester source.
The antifog agent can be incorporated in a polymeric film or sheet by first mixing it into molten polymer (preferably a polyolefin) using conventional techniques, such as extrusion, roll-milling or mixing it in a Banbury mixer. The antifog agent may be added to the polymer before or after said polymer has been melted. It may be added as such, or in the form of a masterbatch. The resulting composition is then solidified by cooling and then comminuted to a particle size satisfactory for further form shaping processes like blown film extrusion, cast film extrusion, hot melt extrusion, or equivalent heat-shaping operations.
It is also possible to incorporate this polymer-antifog agent composition into a multi-layer system. Such a multi-layer system will contain at least one layer made from this composition. Other layers of such a multi-layer system may be based on, for instance, polyamide (e.g. nylon) and/or polyester (e.g. polyethylene terephthalate).
Multi-layer systems can be prepared by co-extrusion or lamination.

Suitable polymers for making said sheets or films are polyolefins. Examples of suitable polyolefins are polyethylene, polypropylene (PP), random- and block-copolymers of ethylene and propylene, ethylene vinyl acetate copolymer (EVA), and polymers obtained from ethylene or propylene copolymerized with minimal amounts of other mono-olefinic monomers such as butene, isobutylene, acrylic acids, esters of acrylic acids, styrene or combinations thereof.
Polyethylenes include high density polyethylene (HDPE; defined by a density of greater or equal to 0.941 g/cm³), medium density polyethylene (MDPE; defined by a density range of 0.926-0.940 g/cm³), linear low density polyethylene (LLDPE; defined by a density range of 0.915-0.925 g/cm³), low density polyethylene (LDPE; defined by a density range of 0.910-0.940 g/cm³), very low density polyethylene (VLDPE; defined by a density range of 0.880-0.915 g/cm³), and blends thereof.
Suitable polyethylenes can be made by radical polymerisation or by metallocene or Ziegler Natta-catalysed polymerisation and also includes blends of such differently polymerised polyethylenes.
Preferred polyolefins are LLDPE, LDPE, EVA, and polymer blends containing LDPE and/or EVA. Most preferred is EVA, more in particular EVA with a vinyl acetate content 0.10-30 wt%.

The antifog agent is incorporated in the polymer in an amount sufficient to impart fog resistance to the film. If an excess amount of antifog agent is incorporated in the polyolefin, the polyolefin tends to be tacky and has a greasy feel. The blocking and slip properties of the resulting agricultural film may also be adversely affected. Moreover, an excess of antifog agent in the film adversely affects the adhesion of inks thereto.
The antifog agent is therefore incorporated in the polymeric film or sheet an amount of 0.25-5.0 wt%, preferably 0.5-4.0 wt%, and most preferably 1.0-3.0 wt% of ethoxylated glycerol fatty acid ester, and 0.1-2.5 wt%, preferably 0.25-2.0 wt%, and most preferably 0.25-1.5 wt% of one or more substances selected from polyglycerol fatty acid esters and glycerol fatty acid triesters.

In addition to the antifog agent, the polymeric film or sheet may contain various conventional additives, such as anti-static agents, anti-oxidants, anti-ozonants, slip agents, anti-block agents, light stabilizers (e.g. HALS), UV stabilizers, colorants, tackifiers, and the like, if so desired. Specific examples of additives are ethylene bis-stearamide and ethylene bis-oleamide.

The polymeric film or sheet containing the antifog agent can be used as or as part of an agricultural film.
The agricultural film preferably has a visible light transmission of at least 50%, more preferably 60%, even more preferably at least 75%, and most preferably at least 80%. Visible light is defined as light with a wavelength in the range 380-770 nm. The visible light transmission of the film is determined by spectrophotometry.
The agricultural film should therefore preferably be essentially free of compounds that severely hinder the transmission of visible light through the resulting film. Examples of such compounds are carbon black and other carbon-based materials.
The agricultural film can be used for various agricultural applications, such as energy screens and greenhouse covers.

### EXAMPLES

### Test methods

### Hot fog test:

Beakers of 600 ml (high model, 150 mm, 80 mm ø, without spout) were filled with 350 ml of tap water. Films prepared according to the Examples below were cut and placed on the beaker and fixed with a rubber band. The beakers were placed in a water bath at 40°C and fog was determined visually after 5, 10, 15 and 30 minutes and after 1, 2 and 5 hours on the first day; and once a day thereafter.

The Fog Score is the best result obtained over time. It was scored according to the following system:
A: Opaque layer of small fog droplets
B: Opaque layer of large droplets
C: Complete layer of large transparent drops
D: Randomly scattered or only large transparent droplet(s)/ discontinue film of water
E: Transparent film having no visible water

Hot fog durability is defined as the time until the film started to form droplets and the Fog Score dropped below D.

### Comparative Example 1

To an ethylene-vinyl acetate copolymer (EVA, 7.5 wt% vinyl acetate, MFI= 3 g/10 min), 5 wt% of ethoxylated glycerol monostearate (GMS) with an average degree of ethoxylation of 2.5 was added using a 16 mm twin screw extruder at 160-200 °C (die).
The so formed 5 wt% masterbatch was dry blended with the same EVA polymer as mentioned above to form a composition comprising a 1 wt% ethoxylated glycerol monostearate in EVA. This composition was shaped to form a film using film blowing equipment at 170-190 °C.
The antifog performance of this film is listed in Table 1.

### Comparative Example 2

Comparative Example 1 was repeated, except that instead of 1 wt%, 1.5 wt% of ethoxylated glycerol monostearate with an average degree of ethoxylation of 2.5 was present in the final film.
The antifog performance of this film is listed in Table 1.

### Comparative Example 2

Comparative Example 1 was repeated, except that instead of 1 wt%, 2 wt% of ethoxylated glycerol monostearate with an average degree of ethoxylation of 2.5 was present in the final film.
The antifog performance of this film is listed in Table 1.

### Example 4

Comparative Example 2 was repeated, except that the film contained an additional amount of 0.5 wt% of glycerol tristearate (GTS). The antifog performance of this film is listed in Table 1.

### Example 5

Comparative Example 2 was repeated, except that the film contained an additional amount of 0.5 wt% of polyglycerol monostearate (PGE). The antifog performance of this film is listed in Table 1.

**Table 1 - EVA films**

| Example | wt% EO-GMS | Other substance | wt% other substance | Hot fog durability, score >D days |
|---|---|---|---|---|
| 1 (comp) | 1 | -- | -- | 150 |
| 2 (comp) | 1.5 | -- | -- | 154 |
| 3 (comp) | 2.0 | -- | -- | 180 |
| 4 | 1.5 | GTS | 0.5 | 266 |
| 5 | 1.5 | PGE | 0.5 | 224 |

### Comparative Examples 6 and 7 and Examples 8 and 9

Comparative Examples 1 and 3 and Examples 4 and 5 were repeated, except for using LLDPE instead of EVA. The results are listed in Table 2.

**Table 2- LLDPE**

| Example | wt% EO-GMS | Other substance | wt% other substance | Hot fog durability, score >D days |
|---|---|---|---|---|
| 6 (comp) | 1 | -- | -- | 77 |
| 7 (comp) | 2 | -- | -- | 98 |
| 8 | 1.5 | GTS | 0.5 | >140 |
| 9 | 1.5 | PGE | 0.5 | >182 |

## Claims

1. Antifog agent comprising:
- 50-95 wt% of ethoxylated glycerol fatty acid ester and
- 5-50 wt% of one or more substances selected from polyglycerol fatty acid esters and glycerol fatty acid triesters.

2. Antifog agent according to claim 1 wherein the ethoxylated fatty acid ester comprises ethoxylated glycerol monostearate.

3. Antifog agent according to claim 1 or 2 wherein the ethoxylated fatty acid ester has an average degree of ethoxylation of 1.0-5.0 ethylene oxide groups per glycerol ester unit.

4. Antifog agent according to any one of the preceding claims comprising 5-50 wt% of one or more polyglycerol fatty acid esters selected from the group consisting of diglycerol fatty acid ester, triglycerol fatty acid ester, tetraglycerol fatty acid ester, and mixturese thereof.

5. Antifog agent according to any one of the preceding claims comprising 5-50 wt% of one or more polyglycerol fatty acid esters selected from the groups consisting of polyglycerol monostearate, polyglycerol monopalmitate, polyglycerol monomyristate, polyglycerol monolaurate, and mixtures thereof.

6. Antifog agent according to any one of the preceding claims comprising 5-50 wt% of one or more glycerol fatty acid triesters selected from the group consisting of glycerol tristearate, glycerol tripalmitate, glycerol trimyristate, glycerol trilaurate, and mixtures thereof.

7. Masterbatch of an antifog agent comprising 5-70 wt% of the antifog agent of any one of the preceding claims and 30-95 wt% of a polymeric matrix.

8. Masterbatch according to claim 7 wherein the polymeric matrix is a matrix comprising ethylene vinyl acetate copolymer (EVA), low density polyethylene (LDPE), linear low density polyethylene (LLDPE), and/or blends thereof.

9. Polymeric film or sheet comprising the antifog agent of any one of claim 1 - 6.

10. Polymeric film or sheet according to claim 9 wherein the polymeric film or sheet comprises:
- 0.25-5.0 wt% of ethoxylated glycerol fatty acid ester, and
- 0.1-2.5 wt% of one or more substances selected from polyglycerol fatty acid esters and glycerol fatty acid triesters.

11. Polymeric film or sheet according to claim 9 or 10 wherein the polymeric film or sheet is made from a polymer selected from the group consisting of ethylene vinyl acetate copolymer (EVA), low density polyethylene (LDPE), linear low density polyethylene (LLDPE), and blends thereof.

12. Agricultural film or sheet comprising the polymeric film or sheet according to any one of claims 9-11.

13. Use of the agricultural film or sheet according to claim 12 as greenhouse cover.

14. Use of the agricultural film or sheet according to claim 12 as energy screen.
